# EUROPEAN PATENT APPLICATION

(11) **EP 4 675 328 A2**
(43) Date of publication of application: **07.01.2026**
(21) Application number: 25218476.7
(22) Date of filing: 09.11.2020
(51) Int. Cl.: G02B 6/44

(54) **METHOD FOR EXPOSING CORE OF OPTICAL FIBER CABLE, AND OPTICAL FIBER CABLE**

(30) Priority: 27.11.2019 JP 2019214076
(62) Divisional of application: 20892350.8
(71) Applicant: Fujikura Ltd., Tokyo 135-8512 (JP)
(72) Inventor: OHNO, Masatoshi, CHIBA, 285-8550 (JP); MUKAI, Okimi, CHIBA, 285-8550 (JP); TAKI, Go, CHIBA, 285-8550 (JP); SHIMIZU, Shogo, CHIBA, 285-8550 (JP); INAGAKI, Ryo, CHIBA, 285-8550 (JP); NAMAZUE, Akira, CHIBA, 285-8550 (JP); OSATO, Ken, CHIBA, 285-8550 (JP)
(74) Representative: Plasseraud IP

(57) **Abstract**

An optical fiber cable is provided comprising a core comprising an optical fiber, a wrapping tube wrapping the core, a jacket housing the core and the wrapping tube, a tension-resisting member of a fiber reinforced plastics (FRP) embedded in the jacket and a wire member which is flexible, includes fibers, and is embedded in the jacket. In a transverse cross-sectional view, the wire member is located inside a virtual circle that has a center which is a center axis of the core and that passes through a center of the tension-resisting member. A circumferential dimension of the wire member is greater than a radial dimension of the wire member.

## Description

### TECHNICAL FIELD

The present invention relates to a method of exposing a core of an optical fiber cable and an optical fiber cable.

### BACKGROUND ART

An optical fiber cable generally includes a core including an optical fiber and a jacket that houses the core. In the method of exposing a core of an optical fiber cable disclosed in Patent Document 1, a cut is made along the circumferential direction in the jacket, and the portion of the jacket that is located between the cut and the end portion of the optical fiber cable is removed.

### PRIOR ART

### PATENT DOCUMENT

[Patent Document 1] Japanese Patent Application, First Publication, No. 2017-3762

### DISCLOSURE OF INVENTION

### PROBLEMS TO BE SOLVED BY THE INVENTION

In such optical fiber cables, there is a need to improve the ease of work to expose the core. For example, if a tension-resisting member is embedded in a jacket, it is not easy to remove the jacket simply by making a cut along the circumferential direction of the jacket, as in the disassembly method of Patent Document 1.

The present invention has been made in consideration of such circumstances, and it is an object of the present invention to provide an optical fiber cable or a method of exposing a core that can improve the ease of work to expose a core.

### MEANS FOR SOLVING THE PROBLEMS

In order to solve the above-described problems, an optical fiber cable according to the independent claim 1 is provided.

Alternatively, an optical fiber cable as defined in the independent claim 3 is provided.

Furthermore, an optical fiber cable according to the dependent claims 2 could be provided, as an addition to the characterizing features of the respective independent claims.

### EFFECT OF THE INVENTION

According to the above-described characteristics of the present invention, it is possible to provide an optical fiber cable or a method of exposing a core that can improve the ease of work to expose a core.

### BRIEF DESCRIPTION OF THE DRAWING

Fig. 1 is a transverse cross-sectional view of an optical fiber cable of the first embodiment.
Fig. 2 is a diagram showing a cutting process in a method of exposing a core of the optical fiber cable according to the first embodiment.
Fig. 3A is a vertical cross-sectional view corresponding to Fig. 2.
Fig. 3B is a diagram showing the process followed in Fig. 3A.
Fig. 3C is a diagram showing the process followed in Fig. 3B.
Fig. 3D is a diagram showing the process followed in Fig. 3C.
Fig. 4 is a transverse cross-sectional view of an optical fiber cable of the second embodiment.
Fig. 5A is a diagram showing a cutting process in a method of exposing a core of the optical fiber cable according to the second embodiment.
Fig. 5B is a diagram showing the process followed in Fig. 5A.
Fig. 5C is a diagram showing the process followed in Fig. 5B.
Fig. 6 is a transverse cross-sectional view of an optical fiber cable of the third embodiment.
Fig. 7 is a cross-sectional arrow view taken along the line VII-VII of Fig. 6.
Fig. 8A is a diagram showing a cutting process in a method of manufacturing the optical fiber cable according to the third embodiment.
Fig. 8B is a diagram showing the process followed in Fig. 8A.
Fig. 9A is a diagram showing a cutting process in a method of manufacturing an optical fiber cable of a modification example of the third embodiment.
Fig. 9B is a diagram showing the process followed in Fig. 9A.

### BEST MODE FOR CARRYING OUT THE INVENTION

### First Embodiment

An optical fiber cable and a method of exposing a core of the optical fiber cable of the first embodiment are described below based on the drawings.

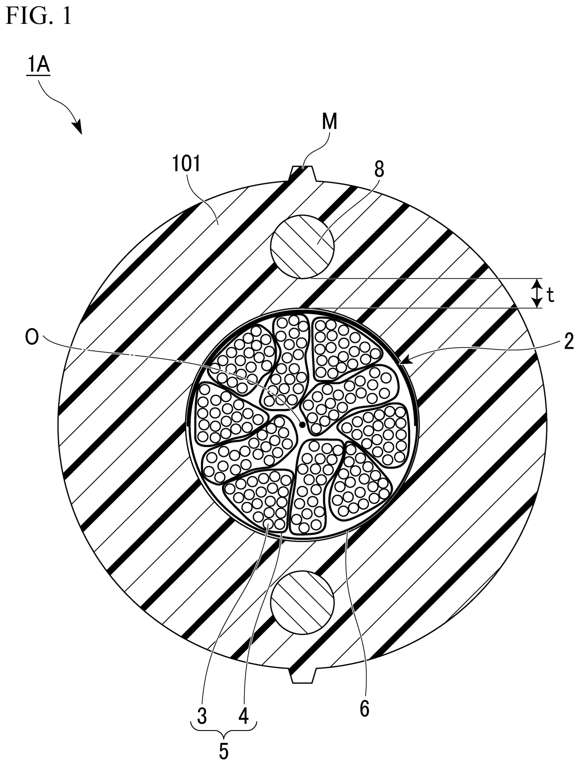

As shown in Fig. 1, an optical fiber cable 1A of the present embodiment includes a core 2, a wrapping tube 6, a jacket 101, and a tension-resisting member 8. The optical fiber cable 1A is a so-called slotless optical fiber cable that does not have a slot rod formed with grooves to house optical fibers.

### (Definition of Direction)

In the present embodiment, a longitudinal direction of the optical fiber cable 1A is simply referred to as the longitudinal direction. The cross-section perpendicular to the longitudinal direction is referred to as a transverse cross-section, and the cross-section along the longitudinal direction is referred to as a longitudinal cross-section. In the transverse cross-sectional view, the direction intersecting the central axis O of the optical fiber cable is referred to as a radial direction, and the direction of the circumference around the central axis O is referred to as a circumferential direction.

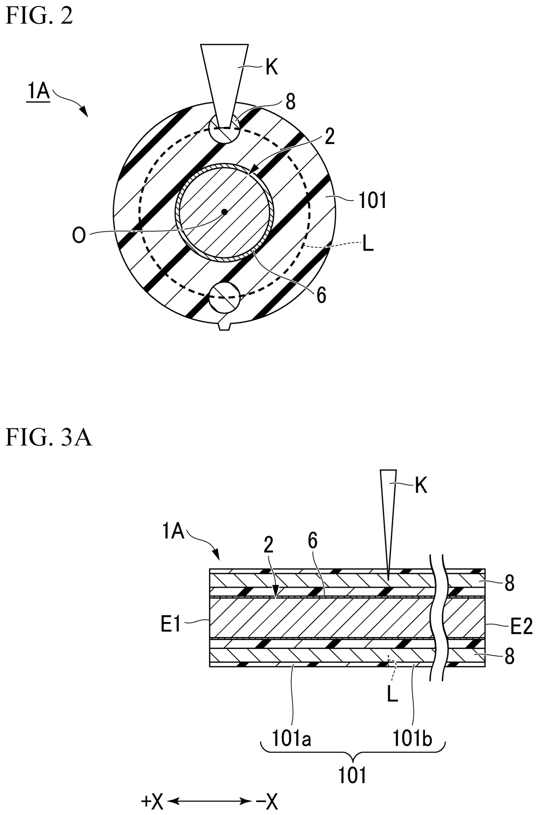

In the longitudinal direction, a side of the first end portion E1 (see Fig. 3A) of the optical fiber cable 1A is referred to as the +X side, and a side of the second end portion E2 is referred to as the -X side.

The core 2 includes a plurality of optical fiber ribbons 5. The optical fiber ribbons 5 have a plurality of optical fibers 3 and a binding material 4 that binds these optical fibers 3. Optical fibers such as an optical fiber core wire and an optical fiber element wire can be used as the optical fibers 3. The optical fiber ribbon 5 can be a so-called intermittently-fixed optical fiber ribbon. When the optical fiber ribbon 5 is an intermittently-fixed optical fiber ribbon, a plurality of optical fibers 3 are bonded to each other so that they spread out in a mesh (spider web) manner when pulled in a direction orthogonal to their extended direction. In detail, one optical fiber 3 is bonded to two neighboring optical fibers 3 thereof at different positions in the longitudinal direction, and the neighboring optical fibers 3 are bonded to each other with a certain distance in the longitudinal direction.

The plurality of optical fiber ribbons 5 are twisted together in an SZ shape or a spiral shape and wrapped by a wrapping tube 6. The aspect of the optical fiber ribbons 5 is not limited to intermittently-fixed optical fiber ribbon, and may be changed as appropriate. In addition, the number of optical fiber ribbons 5 can be changed as appropriate, and may be one. Furthermore, a plurality of optical fibers 3 may be wrapped by a wrapping tube 6 without being bundled by a binding material 4.

The wrapping tube 6 wraps the core 2. Non-woven fabric or a polyester tape can be used as the wrapping tube 6. The wrapping tube 6 may also have water-absorption properties.

The jacket 101 houses the core 2 and the wrapping tube 6 inside thereof. Polyolefin (PO) resins such as polyethylene (PE), polypropylene (PP), ethylene ethyl acrylate copolymer (EEA), ethylene vinyl acetate copolymer (EVA), ethylene propylene copolymer (EP), and polyvinyl chloride (PVC) can be used as the material of the jacket 101. A mark M indicating the position of the tension-resisting member 8 is formed on the outer peripheral surface of the jacket 101. The mark M in the present embodiment is a projection that protrudes outward in the radial direction and extends over the entire length of the optical fiber cable 1A. Note that the mark M may not be a projection, and may be, for example, a concave portion or a colored portion. There may be no mark M. Even when there is no mark M, the user can recognize the position of the tension-resisting member 8 by, for example, the directionality of the bending of the optical fiber cable 1A brought about by the pair of tension-resisting members 8.

The tension-resisting member 8 is embedded in the jacket 101. In the present embodiment, two tension-resisting members 8 are arranged in the radial direction so as to sandwich the core 2 therebetween. The tension-resisting member 8 is formed of Fiber Reinforced Plastics (FRP). A glass fiber, a carbon fiber, an aramid fiber, and the like can be used as fibers included in the FRP. The number of tension-resisting members 8 embedded in the jacket 101 may be one or three or more. When three or more tension-resisting members 8 are used, the tension-resisting members 8 may be arranged at equal intervals in the circumferential direction. In such a case, the directionality of bending in the optical fiber cable 1A can be suppressed to make the optical fiber cable 1A easier to handle.

Next, the method of exposing the core of the optical fiber cable 1A will be described.

As shown in Fig. 2, first, a tool K such as a blade is applied to the mark M, and the tool K is advanced into the jacket 101 while cutting the jacket 101. Since the jacket 101 is formed of soft resin, the tool K can easily be advanced into the jacket 101. On the other hand, since the tension-resisting member 8 is formed of an FRP, the resistance with respect to cutting is greater in the tension-resisting member 8 than in the jacket 101. Therefore, when the tip of the tool K abuts the tension-resisting member 8, the progress of the tool K is suspended. In the present embodiment, the tool K does not completely cut the tension-resisting member 8. However, a portion of the outer periphery of the tension-resisting member 8 may be scratched by the tool K. Alternatively, the portion of the tension-resisting member 8 that is located at an outer side in the radial direction may be cut by the tool K, and the portion of the tension-resisting member 8 that is located at an inner side in the radial direction may be connected without being cut.

Next, the tool K is moved in the circumferential direction. As a result, a cut L as shown by the dashed line in Fig. 2 is made into the jacket 101 along the circumferential direction (cutting process). The cut L is made at least the entire circumference of the outer surface of the jacket 101. In Fig. 2, the position of the cut L in the radial direction is constant over the entire circumference in the circumferential direction; however, the position of the cut L in the radial direction may vary along the circumferential direction. In particular, since the resistance acting on the tool K is smaller in the circumferential direction where the tension-resisting member 8 is not located, the cut L may be located at an inner side in the radial direction than the location of the tension-resisting member 8.

As shown in Fig. 3A, in the present embodiment, the portion of the jacket 101 that is located on the +X side (side of first end portion E1) from the cut L is called the removed portion 101a, and the portion located on the -X side (side of second end portion E2) from the cut L is called the residual portion 101b.

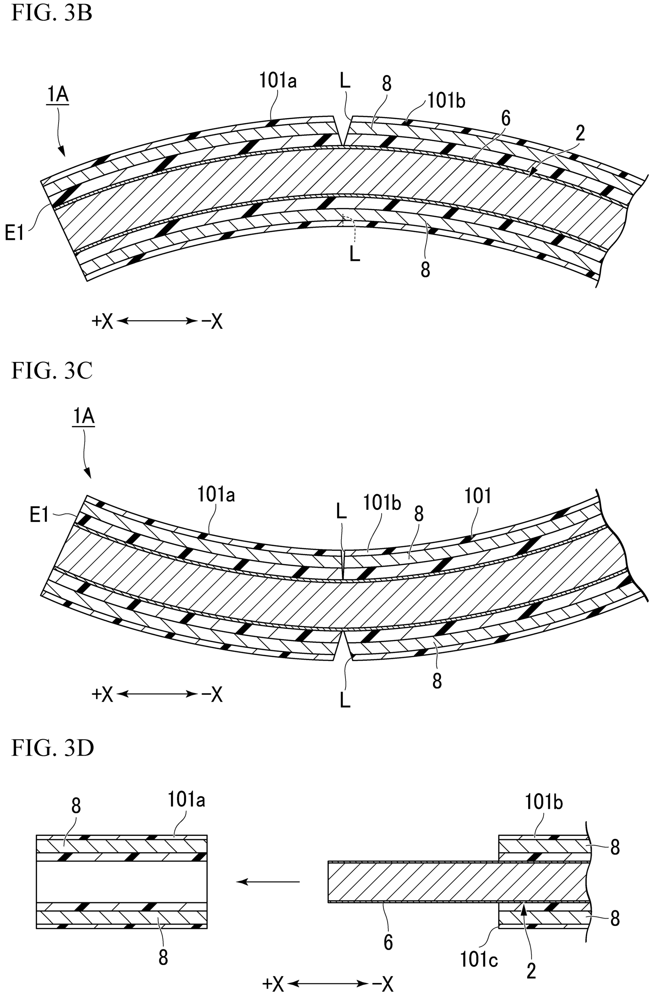

After the cutting process, the optical fiber cable 1A is curved so that the position of the cut L is convex (upper side of the paper in Fig. 3B) and concave (lower side of the paper in Fig. 3B) in the longitudinal direction as shown in Fig. 3B. In particular, by grasping the removed portion 101a and the residual portion 101b with both hands and applying a bending force to the optical fiber cable 1A starting from the cut point L. Then, a strong tensile stress is applied to the tension-resisting member 8 at the position where the cut L is formed in the longitudinal direction and where the cable is bent in a convex manner. The tensile stress causes one of the two tension-resisting members 8 to fracture (fracture process). Especially when the tension-resisting member 8 is scratched or partially cut in the cutting process, the tension-resisting member 8 is fractured smoothly.

Next, as shown in Fig. 3C, the optical fiber cable 1A is curved again so that the portion that was curved to be concave in Fig. 3B becomes convex. This causes the other of the two tension-resisting members 8 to be fractured. In such a manner, in the present embodiment, the optical fiber cable 1A is bent multiple times by changing the bending direction, and each tension-resisting member 8 is fractured by such the operation. It is considered that the FRP, which is the material of the tension-resisting member 8, can be fractured in such a manner because it is not a material that fractures ductilely like metal, but fractures brittly easily. In the fracture process, the jacket 101 located at an inner side in the radial direction of the tension-resisting member 8 may also be fractured together with the tension-resisting member 8.

Next, a force is applied to pull out the removed portion 101a of the jacket 101 toward the +X side. As a result, tensile stress concentrates on the portion where the removal portion 101a is connected to the residual portion 101b (the portion which is at an inner side in the radial direction than the cut L), and the portion is fractured. As a result, the removal portion 101a separates from the residual portion 101b as shown in Fig. 3D, and the wrapping tube 6 covered with the removal portion 101a becomes exposed (removal process). More specifically, the wrapping tube 6 and the core 2 are extended from the end surface 101c of the jacket 101 to the +X side. The end surface 101c is a surface formed by making a cut L in the jacket 101. Since the wrapping tube 6 can be easily peeled off from the core 2, the user can easily expose the core 2 once the wrapping tube 6 is exposed.

As described above, the optical fiber cable 1A of the present embodiment includes a core 2 having an optical fiber 3, a wrapping tube 6 wrapping the core 2, a jacket 101 housing the core 2 and the wrapping tube 6, and a tension-resisting member 8 made of an FRP embedded in the jacket 101. The method of exposing the core of the optical fiber cable of the present embodiment is to make a cut L along the circumferential direction in the jacket 101 at a position closer to the first end portion E1 than to the second end portion E2 of the optical fiber cable 1A in the longitudinal direction (cutting process), and to bend the optical fiber cable 1A at the portion where the cut L is made to fracture the tension-resisting member 8 (fracture process), and to remove the removal portion 101a located between the cut L and the first end portion E1 of the jacket 101 (removal process). Such a method of exposing the core makes it possible to easily expose the core 2 even if the tension-resisting member 8 is embedded in the jacket 101.

As shown in Fig. 3D, in the removal process, the wrapping tube 6, which was covered with the removed portion 101a, is extended from the residual portion 101b located between the cut L and the second end portion E2 in the jacket 101. In the present way, by maintaining the state in which the wrapping tube 6 wraps the core 2 even after the removal process, the optical fiber 3 included in the core 2 can be suppressed from being unexpectedly damaged.

In addition, by also cutting into the tension-resisting member 8 in the cutting process, the tension-resisting member 8 can be fractured more easily in the fracture process.

### Second Embodiment

Next, the second embodiment of the present invention will be described. The basic configuration is the same as that of the first embodiment. For such a reason, the same reference symbol refers to the same configuration and its description is omitted, and only the differences are described.

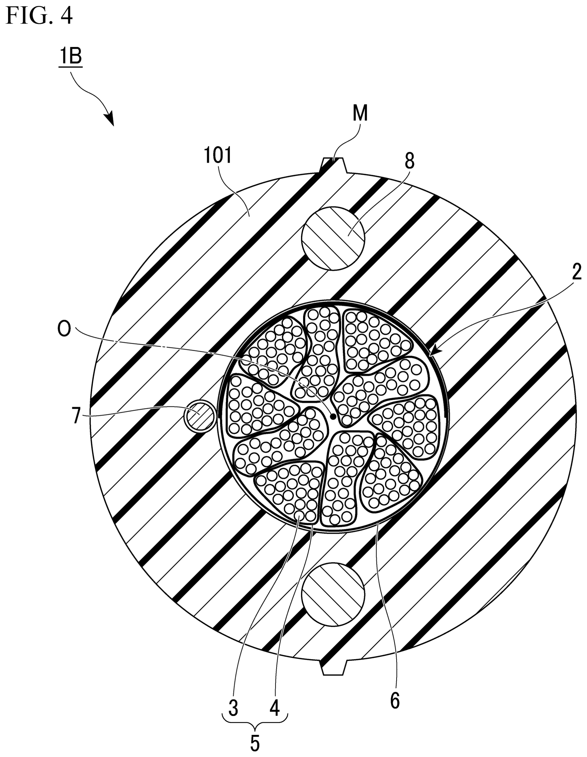

As shown in Fig. 4, the optical fiber cable 1B of the present embodiment further includes a rip cord 7. The rip cord 7 is disposed so as to be in contact with or close to the wrapping tube 6 and extends along the longitudinal direction. In the example of Fig. 4, the rip cord 7 is embedded in the jacket 101 so that a portion thereof is exposed from the jacket 101 at an inner side in the radial direction. However, the rip cords 7 may not be embedded in the jacket 101 as long as the rip cords 7 are designed not to move in the circumferential and longitudinal directions. The number of rip cords 7 can be changed, and may be two or more.

As the rip cord 7, a cylindrical rod made of PP or nylon can be used. The rip cord 7 can also be formed by twisted yarns of PP or polyester fibers to provide the rip cord 7 water absorption properties.

Other than the rip cord 7, the configuration of the optical fiber cable 1B is the same as that of the optical fiber cable 1A.

Next, the method of exposing the core of the optical fiber cable 1B of the present embodiment will be described.

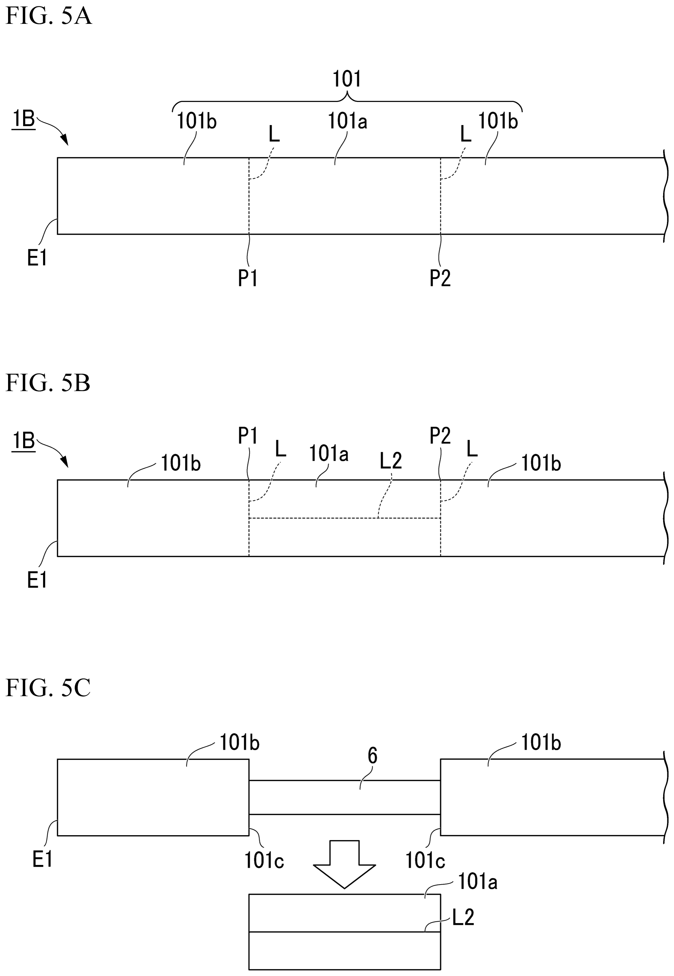

First, as shown in Fig. 5A, cuts L are made along the circumferential direction in the jacket 101 at the first and second positions P1 and P2, which are different in the longitudinal direction (cutting process). The depth and the like of each cut L is the same as in the first embodiment. In the present embodiment, the portion of the jacket 101 that is located between the first and second positions P1 and P2 in the longitudinal direction is referred to as the removed portion 101a, and the other portion is referred to as the residual portion 101b.

Next, each tension-resisting member 8 is fractured by bending the optical fiber cable 1B at the first and second positions P1 and P2 (fracture process). The mechanism of fracture of the tension-resisting member 8 is the same as in the first embodiment.

Next, as shown in FIG. 5B, a second cut L2 is made in the jacket 101 along the longitudinal direction between the first position P1 and the second position P2 (second cutting process). The second cut L2 is formed over the entire length in the longitudinal direction of the removed portion 101a. The position of the second cut L2 in the circumferential direction is preferably on the opposite side of the rip cord 7 as seen from the core 2.

Next, by pulling the removal portion 101a in the radial direction, the connection between the removal portion 101a and the residual portion 101b is fractured. As a result, as shown in Fig. 5C, the removal portion 101a is removed and the wrapping tube 6 is exposed (removal process). More specifically, the wrapping tube 6 and the core 2 become extended between the two end surfaces 101c of the jacket 101. In the present embodiment, two end surfaces 101c are formed because two cuts L are made. When the removal portion 101a is removed, the removal portion 101a is elastically deformed so that the second cut L2 opens to form an opening, and the wrapping tube 6 and core 2 pass through the opening. Fig. 5C shows that after the wrapping tube 6 and core 2 pass through the opening of the removal portion 101a, the opening is closed by elastic force.

As described above, the method of exposing an optical fiber cable of the present embodiment is making a cut L along the circumferential direction in the jacket 101 at the first position P1 and the second position P2, which are different in the longitudinal direction (cutting process), bending the optical fiber cable 1B at the first position P1 and the second position P2 to fracture the tension-resisting member 8 (fracture process), making a second cut L2 in the jacket 101 along the longitudinal direction between the first position P1 and the second position P2 (second cutting process), and removing the removal portion 101a that is located between the first position P1 and the second position P2 in the jacket 101 (removal process). According to such a method of exposing the core, it is possible to easily expose the core 2 even if the tension-resisting member 8 is embedded in the jacket 101. Furthermore, the core 2 can be exposed even in the middle portion in the longitudinal direction of the optical fiber cable 1B.

In addition, by both cutting with the tool K and tearing with the rip cord 7, longitudinally extending cuts can be made in the removal portion 101a at two different locations in the circumferential direction. This makes it easier to remove the removal portion 101a because the removal portion 101a is divided into two portions in the circumferential direction. As described earlier, if the removal portion 101a is elastically deformed to form an opening and the opening is used to remove the removal portion 101a from the wrapping tube 6 and core 2, the removal portion 101a can be removed without tearing the removal portion 101a by the rip cord 7. Therefore, the rip cord 7 is not essential.

### Third Embodiment

Next, the third embodiment of the present invention will be described. The basic configuration is the same as that of the first embodiment. For such a reason, the same reference symbol refers to the same configuration and its explanation is omitted, and only the different points are described.

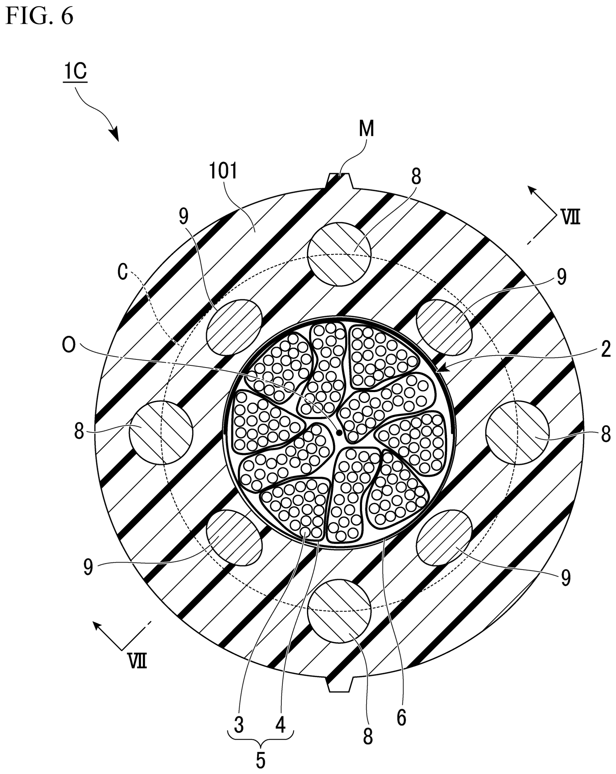

As shown in Fig. 6, the optical fiber cable 1C of the present embodiment has four tension-resisting members 8 and four wire members 9. The tension-resisting members 8 and the wire members 9 are arranged alternately in the circumferential direction and extend along the longitudinal direction. However, the number and arrangement of the tension-resisting members 8 and wire members 9 can be changed as appropriate.

The wire member 9 is elliptical in the transverse cross-section, and its dimensions in the radial direction are smaller than those in the circumferential direction. In the transverse cross-section shown in Fig. 6, the virtual circle C passes through the center of the tension-resisting member 8 with the central axis line O. The wire member 9 is located inside the virtual circle C.

The wire member 9 includes fibers and has flexibility. For example, glass fiber and aramid fiber can be employed as the fiber of the wire member 9. The fibers of the wire member 9 may or may not be twisted together. The wire member 9 may have a coating (for example, resin) covering the surface of the fibers. However, the wire member 9 preferably has flexibility enough so as not to be fractured when the optical fiber cable 1C is bent in the fracture process.

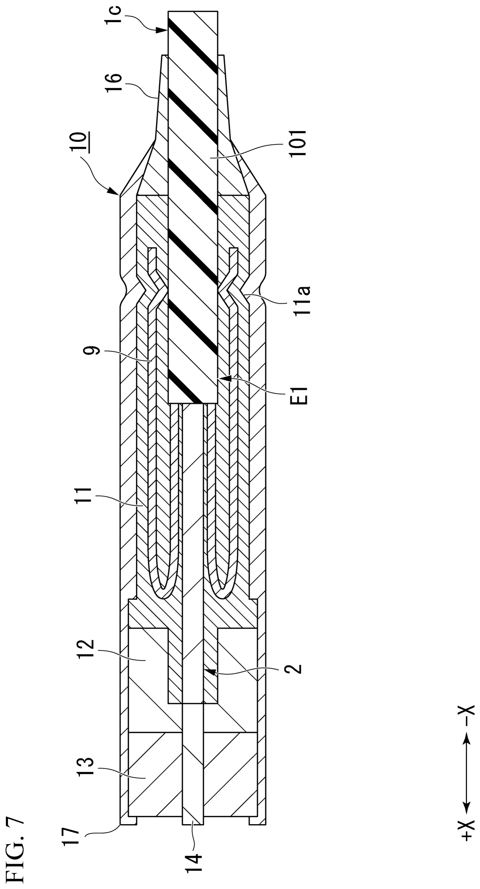

As shown in Fig. 7, the optical fiber cable 1C further includes an optional component 10 fixed to the first end portion E1. In the example of Fig. 7, the optional component 10 is a waterproof connector. However, the optional component 10 may be a type of optical connector other than a waterproof connector, for example, a closure or a towing device, or other than an optical connector. A closure is a component that protects the exposed optical fiber at the branch where the optical fiber 3 is branched from the optical fiber cable 1C. The towing tool is a component for towing the optical fiber cable 1C when it is laid in a building duct or the like. The wire member 9 is used to increase the strength of the fixation between these optional components 10 and the optical fiber cable 1C.

The optional component (waterproof connector) 10 shown in Fig. 7 has a clamp member 11, a connector unit 12, a coupling unit 13, a ferrule 14, a boot 16, and a connector outer portion 17. The clamp member 11, the connector unit 12, the coupling unit 13, the ferrule 14, and the boot 16 are distributed inside the cylindrical connector outer portion 17. The inside of the clamp member 11 is filled with adhesive (not shown). The waterproof connector 10 with these components has a cylindrical shape as a whole and covers the vicinity of the end surface 101c of the jacket 101. As described in the first embodiment, the end surface 101c is formed by making a cut L in the jacket 101 at a position close to the first end portion E1 of the optical fiber cable 1C. The core 2 and the wire member 9 extend from the end surface 101c to the +X side in the longitudinal direction. The wire member 9 extends farther from the end surface 101c than the tension-resisting member 8. The tension-resisting member 8 may or may not extend from the end surface 101c. The case where the tension-resisting member 8 does not extend farther from the end surface 101c is also included in "the wire member 9 extends farther from the end surface 101c than the tension-resisting member 8".

Although the detailed illustration is omitted, the ferrule 14 has fiber holes for inserting the optical fiber 3 included in the core 2. The optical fiber 3 included in the core 2 passes through the waterproof connector 10 and reaches the tip (+X side end) of the ferrule 14. When the waterproof connector 10 is connected to another optical connector or the like, the optical fiber 3 is optically connected to the optical circuit (optical fiber, optical waveguide, and the like) included in the other connector. Along with the core 2 (optical fiber 3), the wrapping tube 6 may also extend from the end surface 101c. Alternatively, the wrapping tube 6 may not extend from the end surface 101c.

The jacket 101 and the wire member 9 are fixed to the waterproof connector 10 by the adhesive filled in the clamp member 11. Furthermore, the adhesive prevents water or other substances from entering the waterproof connector 10.

As shown in Fig. 7, the wire members 9 are folded inside the clamp member 11. A portion of the folded wire member 9 is located between the jacket 101 and the clamp member 11. The portions of the clamp member 11 and the connector exterior 17 that cover the jacket 101 and the wire member 9 are plastically deformed toward an inner side in the radial direction to form a recess 11a. The recess 11a causes the wire member 9 to be pressed against the jacket 101. With such a configuration, the optional component 10 can be fixed more firmly to the optical fiber cable 1C.

Next, the method of fixing the optional component 10 to the optical fiber cable 1C (in other words, a method of manufacturing the optical fiber cable 1C to which the optional component 10 is fixed) will be described.

First, an optical fiber cable 1C with no optional components 10 is prepared.

Next, the core 2 and the wire member 9 are exposed from the jacket 101 at the first end portion E1 of the optical fiber cable 1C by the same procedure as the method of exposing the core of the optical fiber cable 1A described in the first embodiment.

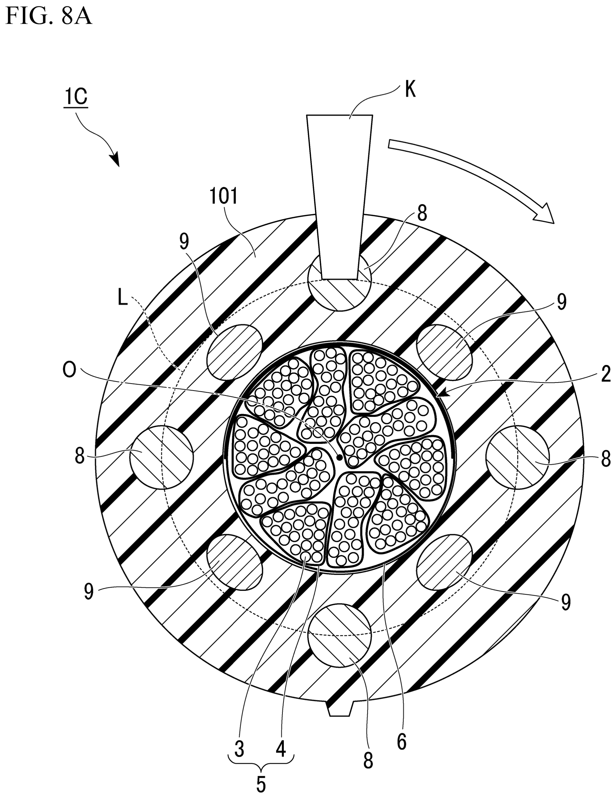

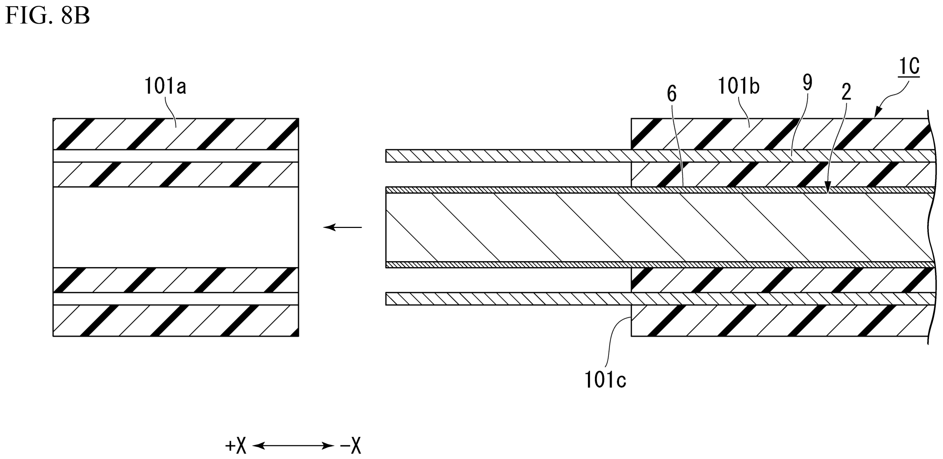

In more detail, as shown in Fig. 8A, the tool K is advanced into the jacket 101 while cutting the jacket 101. In addition, by moving the tool K in the circumferential direction, the jacket 101 and the tension-resisting member 8 are partially cut (cutting process). In the example of Fig. 8, the tool K cuts the portion of the tension-resisting member 8 that is located at an outer side of the radial direction. In other words, a cut L along the aforementioned virtual circle C is formed in the jacket 101 and the tension-resisting member 8. The tool K is preferably configured to be movable in the circumferential direction with respect to the optical fiber cable 1C while the distance from the central axis O (i.e., the position in the radial direction) is regulated. The degree to which the tool K is advanced in the radial direction can be changed as appropriate. However, it is preferable that the cut L be formed outside the virtual circle C (see Fig. 6) in the radial direction so that the wire member 9 is not cut by the tool K.

In the present embodiment, the portion of the jacket 101 that is located on the +X side (side of first end portion E1) from the cut L is called the removed portion 101a, and the portion located on the -X side (side of second end portion E2) from the cut L is called the residual portion 101b.

After the cutting process, the optical fiber cable 1C is bent so that the position of the cut L becomes convex and concave in the longitudinal direction (similar to Figs. 3B and 3C). As a result, the tension-resisting member 8 is fractured at the portion that was scratched or partially cut in the cutting process (fracture process). As shown in Fig. 6, when four tension-resisting members 8 are arranged at equal intervals in the circumferential direction, the optical fiber cable 1C may be bent multiple times by changing the bending direction so that each tension-resisting member 8 is fractured. Since the tension-resisting member 8 in the present embodiment is also FRP, such a fracture is likely to occur by brittle fracture. On the other hand, since the wire member 9 is mainly composed of fibers and has flexibility, the wire member 9 is not fractured even when the optical fiber cable 1C is bent. In other words, in the fracture process of the present embodiment, the tension-resisting member 8 is fractured so that the wire member 9 is not fractured.

Next, as shown in Fig. 8B, the removal portion 101a of the jacket 101 is pulled out to the +X side and separated from the residual portion 101b (removal process). In the present embodiment, when the removal portion 101a is removed, the wire member 9 is exposed along with the wrapping tube 6. More specifically, the wrapping tube 6, the core 2, and the wire member 9 are extended from the end surface 101c of the jacket 101 to the +X side. At this point, the wire member 9, the core 2, and the wrapping tube 6 may each extend the same length from the end surface 101c. If necessary, unnecessary portions of the wire member 9 and the wrapping tube 6 may be cut off. Since the tension-resisting member 8 is fractured in the vicinity of the end surface 101c, the tension-resisting member 8 may or may not extend slightly farther from the end surface 101c.

Next, the optional component 10 is fixed to the optical fiber cable 1C. For example, the optical fiber 3 reaches the tip of the ferrule 14, and the clamp member 11 is placed over the jacket 101, the wire member 9, and the like. Then, by filling the clamp member 11 with adhesive, the wire member 9, and the like is fixed to the optional component 10.

In the case of the optional component (waterproof connector) 10 as shown in Fig. 7, the process of plastic deformation of the clamping member 11 and the connector outer portion 17 may be performed.

As described above, the optical fiber cable 1C of the present embodiment includes a core 2 having an optical fiber 3, a wrapping tube 6 wrapping the core 2, a jacket 101 housing the core 2 and the wrapping tube 6, a tension-resisting member 8 made of FRP embedded in the jacket 101, and a wire member 9 including a fiber, embedded in the jacket 101, and having flexibility. In the transverse cross-sectional view, the wire member 9 is located inside a virtual circle C that passes through the center of the tension-resisting member 8 with the center axis O of the core 2. Such a configuration prevents the wire member 9 from being unintentionally cut when the tool K makes a cut L in the jacket 101. Therefore, it is easy to work to expose the core 2.

The optical fiber cable 1C further includes an optional component 10, and the wire member 9 is fixed inside the optional component 10 by largely extending in the longitudinal direction from the end surface 101c of the jacket 101 more than the tension-resisting member 8. According to the configuration, the strength of the fixation can be stabilized compared to the case where the optional component 10 and the optical fiber cable 1C are fixed by fixing the tension-resisting member 8 mainly inside the optional component 10.

In a transverse cross-sectional view, the wire member 9 has a flat-shape. In more detail, the circumferential dimension of the wire member 9 is greater than the radial dimension of the wire member 9. This makes it difficult for the wire member 9 to be fractured when a cut L is made with the tool K. On the other hand, it is possible to increase the cross-sectional area of the wire member 9 to increase the strength of the fixation between the optional component 10 and the optical fiber cable 1C.

### EXAMPLE

The above-described embodiments are described below using specific examples, although the present invention is not limited to the following examples.

In the present example, the optical fiber cable 1A described in the first embodiment was prepared. The relationship between the thickness t of the portion of the jacket 101 that is located at an inner side in the radial direction of the tension-resisting member 8 and the ease of removal of the removal portion 101a was confirmed. The results are shown in Table 1.

**(Table 1)**

| THICKNESS t (mm) | REMOVAVILITY |
|---|---|
| 0.6 | 0K |
| 0.8 | 0K |
| 1.0 | 0K |
| 1.2 | 0K |
| 1.4 | NG |

As shown in Table 1, a plurality of optical fiber cables 1A with different thicknesses t in the range of 0.6 to 1.4 mm were prepared. Then, the cutting process, the fracture process, and the removal process described in the first embodiment were performed. As a result, when the thickness t was 1.2 mm or less, the removal portion 101a of the optical fiber cable 1A could be removed without any difficulty. On the other hand, when the thickness t was 1.4 mm, it was difficult to remove the removal portion 101a. This is because when the thickness t is too large, it is difficult to fracture the connection between the removal portion 101a and the residual portion 101b even when the removal portion 101a is pulled out in the longitudinal direction. In view of the above, it is preferable that the thickness t of the portion of the jacket 101 that is located at the inner side in the radial direction of the tension-resisting member 8 be 1.2 mm or less.

Next, in the optical fiber cable 1A, the force to pull out the removal portion 101a in the longitudinal direction (pulling force F) and the ease of removal of the removal portion 101a were confirmed. The results are shown in Table 2.

**(Table 2)**

| PULLING FORCE F(N) | REMOVAVILITY |
|---|---|
| 300 | 0K |
| 400 | 0K |
| 500 | 0K |
| 600 | 0K |
| 700 | NG |

The pulling force F varies depending on the surface properties of the wrapping tube 6 (smoothness, and the like), the surface properties of the jacket 101, and the shape of the core 2. By varying these parameters, a plurality of optical fiber cables 1A with different pulling force F in the range of 300 to 700 N were prepared, as shown in Table 2. Then, the cutting process, the fracture process, and the removal process described in the first embodiment were performed. As a result, when the pulling force F was 600 N or less, the removal portion 101a could be removed without any difficulty. On the other hand, when the pulling force F exceeded 700 N, it was not easy to remove the removed portion 101a. In view of the above, it is preferable that the pulling force F be 600 N or less when pulling out the removal portion 101a in the longitudinal direction.

The technical scope of the present invention is not limited to the above-described embodiments, and various modifications can be made without departing from the purpose of the present invention.

It is also possible to replace the components in the above-described embodiments with well-known components as appropriate without departing from the purpose of the present invention, and the above-described embodiments and modifications may be combined as appropriate.

For example, the optical fiber cable 1A of the first embodiment may include the rip cord 7 described in the second embodiment. In such a case, an application is envisioned in which the core 2 is exposed in the vicinity of the first end portion E1 of the optical fiber cable 1A, and then the rip cord 7 is used to cut through the residual portion 101b.

In the optical fiber cable 1B of the second embodiment, the thickness t of the portion of the jacket 101 that is located at the inner side in the radial direction of the tension-resisting member 8 may be 1.2 mm or less.

In the optical fiber cables 1A and 1B of the above-described embodiment, two tension-resisting members 8 were embedded in the jacket 101 so as to sandwich the core 2, but three or more tension-resisting members 8 may be embedded in the jacket 101 with spacing in the circumferential direction. In such a case as well, the optical fiber cables 1A and 1B can be dismantled in the same manner as the above embodiment by bending them so as to fracture each of the tension-resisting members 8.

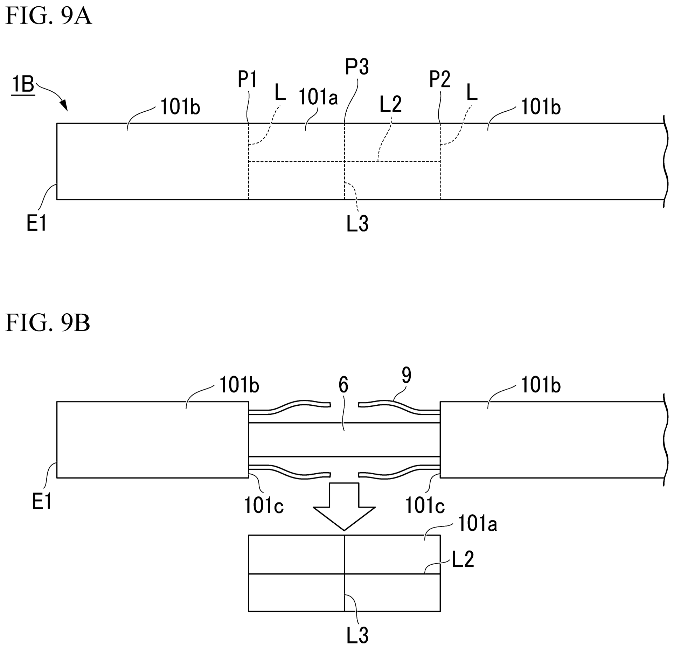

The method of exposing the core described in the second embodiment may also be applied to the optical fiber cable 1C of the third embodiment. In such a case, as shown in FIG. 9A, at the third position P3 between the first position P1 and the second position P2, a third cut L3 may be made along the circumferential direction on the jacket 101 to cut the wire member 9. Next, when the removal portion 101a is removed as shown in Fig. 9B, the wire member 9 is extended from the two end surfaces 101c. The wire member 9 can be used to fix the optional component 10 to the optical fiber cable 1C. Such a modification example is suitable when, for example, a closure is employed as an optional component 10. In such a modification example, the optical fiber cable 1C may further include a rip cord 7 as described in the second embodiment. Alternatively, a wire member 9 can be used as the rip cord 7.

In addition to the claimed subject matter, in order to address the objective technical problem there could be implemented a method of exposing a core of an optical fiber cable comprising a core comprising an optical fiber, a wrapping tube wrapping the core, a jacket housing the core and the wrapping tube, and a tension-resisting member of an (FRP) embedded in the jacket. The method may comprise making a cut along a circumferential direction in the jacket at a position closer to the first end portion of the optical fiber cable than to the second end portion of the optical fiber cable in a longitudinal direction. The method may further comprise bending the optical fiber cable at a portion having the cut to fracture the tension-resisting member. The method may further comprise removing a removal portion of the jacket that is located between the cut and the first end portion.

In the method of exposing a core of an optical fiber cable, when removing the removal portion, the wrapping tube covered with the removal portion may be in a state where the wrapping tube is extended from a residual portion of the jacket that is located between the cut and the second end portion.

In the method of exposing a core of an optical fiber cable, when removing the removal portion, a pulling force when pulling out the removal portion in the longitudinal direction may be 600 N or less.

Alternatively, there could be provided a method of exposing a core of an optical fiber cable comprising a core comprising an optical fiber, a wrapping tube wrapping the core, a jacket housing the core and the wrapping tube, and a tension-resisting member of an FRP embedded in the jacket. The method may comprise making a cut along a circumferential direction in the jacket at a first position and a second position which is a different position in a longitudinal direction. The method may further comprise bending the optical fiber cable at the first position and the second position to fracture the tension-resisting member. The method may also comprise making a second cut along a longitudinal direction in the jacket between the first position and the second position. Finally, the method may comprise removing a removal portion of the jacket that is located between the first position and the second position.

In the method of exposing a core of an optical fiber cable the thickness of the portion of the jacket that is located at an inner side in the radial direction of the tension-resisting member may be 1.2 mm or less.

In the method of exposing a core of an optical fiber cable when making the cut in the jacket, the cut may also be made in the tension-resisting member.

In the method of exposing a core of an optical fiber cable the optical fiber cable may further comprise a rip cord extending in a longitudinal direction and disposed so as to be in contact with or close to the wrapping tube.

An example of an optical fiber cable included in the present disclosure is an optical fiber cable comprising a core comprising an optical fiber a wrapping tube wrapping the core a jacket housing the core and the wrapping tube a tension-resisting member of an FRP embedded in the jacket; and a wire member which is flexible, includes fibers, and is embedded in the jacket. In this optical fiber cable in a transverse cross-sectional view, the liner member has a center which is a center axis of the core and is located inside a virtual circle that passes through a center of the tension-resisting member.

In the above example of an optical fiber cable the optical fiber cable may comprise an optional component, and the wire member extends with a greater distance in a longitudinal direction from an end surface of the jacket than the tension-resisting member and is fixed inside the optional component.

### DESCRIPTION OF THE REFERENCE SYMBOLS

1A, 1B, 1C: Optical fiber cable
2: Core
3: Optical fiber
6: Wrapping tube
7: Rip cord
8: Tension-resisting member
9: Wire member
101: jacket
101a: Removal portion
101b: Residual portion
101c: End surface
E1: First end portion
E2: Second end portion
L: Cut
L2: Second cut
P1: First position
P2: Second position

## Claims

1. An optical fiber cable (1C), comprising:
a core (2) comprising an optical fiber (3);
a wrapping tube (6) wrapping the core (2);
a jacket (101) housing the core (2) and the wrapping tube (6);
a tension-resisting member (8) of a fiber reinforced plastics (FRP) embedded in the jacket (101); and
a wire member (9) which is flexible, includes fibers, and is embedded in the jacket (101), wherein:
in a transverse cross-sectional view, the wire member (9) is located inside a virtual circle (C) that has a center which is a center axis (O) of the core (2) and that passes through a center of the tension-resisting member (8); and
a circumferential dimension of the wire member (9) is greater than a radial dimension of the wire member (9).

2. The optical fiber cable (1C) according to Claim 1, further comprising an optional component (10), wherein
the wire member (9) extends with a greater distance in a longitudinal direction from an end surface of the jacket (101) than the tension-resisting member (8) and is fixed inside the optional component (10).

3. An optical fiber cable (1C), comprising:
a core (2) comprising an optical fiber (3);
a wrapping tube (6) wrapping the core (2);
a jacket (101) housing the core (2) and the wrapping tube (6);
a tension-resisting member (8) of a fiber reinforced plastics (FRP) embedded in the jacket (101);
a wire member (9) which is flexible, includes fibers, and is embedded in the jacket (101); and
an optional component (10), wherein:
in a transverse cross-sectional view, the wire member (9) is located inside a virtual circle (C) that has a center which is a center axis (0) of the core (2) and that passes through a center of the tension-resisting member (8); and
the wire member (9) extends with a greater distance in a longitudinal direction from an end surface of the jacket (101) than the tension-resisting member (8) and is fixed inside the optional component (10).

4. The optical fiber cable (1C) according to Claim 2 or 3, wherein
the optional component (10) is a waterproof connector (10).

5. The optical fiber cable (1C) according to Claim 4, wherein
the waterproof connector (10) includes a clamp member (11), and
the wire member (9) is fixed to the waterproof connector (10) by adhesive filled in the clamp member (11).

6. The optical fiber cable (1C) according to Claim 5, wherein
the waterproof connector (10) further includes:
a ferrule (14) having fiber hole for inserting the optical fiber (3); and
a boot (16) disposed on the jacket (101).
